# EUROPEAN PATENT SPECIFICATION

(11) **EP 1 948 778 B1**
(45) Date of publication and mention of the grant of the patent: **14.01.2009**
(21) Application number: 06821488.1
(22) Date of filing: 17.11.2006
(51) Int. Cl.: C12G 1/02, B01D 33/00, B65D 90/00, B30B 9/26

(54) **FERMENTING AND/OR CELLARING VAT**
GÄRUNGS- UND/ODER EINKELLERUNGSFASS
CUVE DE FERMENTATION ET/OU DE CAVE

(30) Priority: 17.11.2005 IT RM20050570
(43) Date of publication of application: 30.07.2008
(73) Proprietor: Di Zio Construzioni Meccaniche S.P.A., 65010 Spoltore (PE) (IT); Banfi S.r.l., 53024 Montalcino (SI) (IT); Fabbrica Botti Gamba di Gamba Eugenio & C. S.N.C., 14033 Castell'alfero (AT) (IT)
(72) Inventor: BUCCI, Tommaso, I-53024 Montalcino Si (IT); BURATTI, Rudy, I-53024 Montalcino Si (IT)
(74) Representative: Papa, Elisabetta
(86) International application number: PCT/IB2006/054320
(87) International publication number: WO 2007/057863

(56) References cited:
- EP-A- 1 229 108
- DE-A1- 3 225 148
- FR-E- 73 133
- US-A- 3 635 145
- CAGNASS E ET AL: "ESTRAZIONE DEI POLIFENOLI DI UVE NEBBIOLO DA BAROLO CON SISTEMI DIVERSI DI VINIFICAZIONE EXTRACTION OF POLYPHENOLS FROM NEBBIOLO DI BAROLO GRAPES WITH VARIOUS WINEMAKING SYSTEMS" ENOTECNICO, ASSOCIAZIONE ENOTECNICI ITALIANI, MILAN,, IT, vol. 37, no. 4, April 2001 (2001-04), pages 87-98, XP009070498 ISSN: 0392-176X

## Description

The present invention refers to a fermenting and/or cellaring vat, in particular to a fermenting and/or cellaring vat of the type comprising a bottom portion, a wooden side portion and a top portion, wherein top and bottom portions are of a material other than wood.

In the wine-making field, several solutions are known for making vinification and wine-ageing containers, in particular vats and casks.

Specifically, the vat is a vessel for fermenting must with or without pomace, e.g. with the characteristic frustoconical shape; the top portion, whose diameter is generally 9/10 of that of the bottom, may be covered or open, and the side wall has, near the bottom, an opening facilitating the cleaning of its inside. Traditional vats are made with wooden battens, called staves, generally of oak, internally planed and held together by metal hoops.

The ever-increasing knowledge of processes intervening during vinification, and in particular during fermentation on the skins, enabled to develop a new generation of containers for must fermentation.

In modem cellars, fermentation (exothermal reaction) occurs under strict control, in highly equipped vats, generally of stainless steel, commonly referred to as fermentation vessels or fermenting vats. Fermentation vessels allow to automatically carry out, even through electronic cards, steps such as punching-downs and pumpovers, as well as to keep temperature below or above some characteristic critical levels, depending on the grade of the grapes and on the wine that is to be obtained; e.g., the optimal temperature for must fermentation off the skins (red type) ranges from 15 to 20°C, and for must fermentation on the skins (white type) it is of about 25-30°C. Temperatures much higher or lower can slow down fermentation until preventing its continuation. In up-to-date fermentation vessels there are sensors, through which it is possible to control from a single console the fermentation parameters (temperature, developed alcohol, etc.) of the must contained therein and set up steps such as pumpovers and punching-downs, varying their frequency and duration on the basis of the pattern of the fermentation itself.

By pumpover it is meant the pumping of fermenting must from a valve located in the bottom portion of the vat to the top portion thereof so as to spray skins, grape pips, etc, which owing to fine CO₂ bubbles produced by fermentation have been pushed upward, forming a compact layer called cap.

Punching-down consists instead in a mechanical action exerted on the cap, such as to break it and have it sink one piece at the time into the underlying must.

Several wineries witness a return of the traditional vat, as the colour-stabilizing effect of tannins, together with wood micro-oxygenation, yields richer, rounder wines, without unpleasant over-evolved sensations.

In the winemaking field there are some examples of wooden vats with a steel bottom and top that allow, upon devatting, an effective extraction of pomace (skins, grape pips) still present in the vat. Suchlike vats are described, e.g. US 3,635,145 shows a fruit press and fermentation tank; in the Italian Patent Application TO2004A00308, entitled: "tino da vinificazione con parete laterale in legno", teaching a rotor device for automatically cleaning the stainless steel bottom through an opening onto the latter.

Vats of this type entail the drawback of being characterized by a stationary structure, with steel bottom and top directly constrained to the staves forming the wooden side wall. This entails the drawback of not being capable of carrying out in cellar the required periodic maintenance of the internal surface of the wooden side wall. In fact, vat hauling to suitably equipped structures is often required. Said maintenance may envisage, e.g., a planing of the internal surface of the staves or a washing with specific products, commonly carried out by an operator let down into the vat itself - in a closed and unthealthy environment - or a total replacement of the wooden wall. The technical problem underlying the present invention is to provide a vat of the type comprising a bottom portion, a wooden side portion and a top portion that may be easily coupled and uncoupled thereamong, overcoming the drawbacks mentioned hereto with reference to the known art.

Such a problem is solved by a vat according to claim 1.

Preferred features of the present invention are present in the dependent claims thereof.

The present invention provides several relevant advantages. The main advantage of the vat according to the present invention lies in allowing to uncouple and remove, when necessary, one or more than one of the constituent portions thereof: bottom portion, wooden side portion and top portion. This allows an easy maintenance *in situ* of all components and, when necessary, the replacement of one of them independently from the others. Moreover, evidently a wooden side portion uncoupled from the bottom portion and from the top portion can be periodically treated using also industrial machine.

Other advantages, features and the operation modes of the present invention will be made evident by the following detailed description of a preferred embodiment thereof, given by way of example and not for limitative purposes. Reference will be made to the annexed drawings, wherein:
Figure 1 shows a partially sectional exploded front view of an embodiment of the vat according to the present invention;
Figure 2 shows a partially sectional front view of the vat of Figure 1;
Figures 2A and 2B respectively show a sectional view of an enlarged detail of the coupling means of the vat of Figure 2;
Figures 3 and 4 show respectively a plan view of the top portion and of the bottom portion of the vat according to a preferred embodiment thereof.

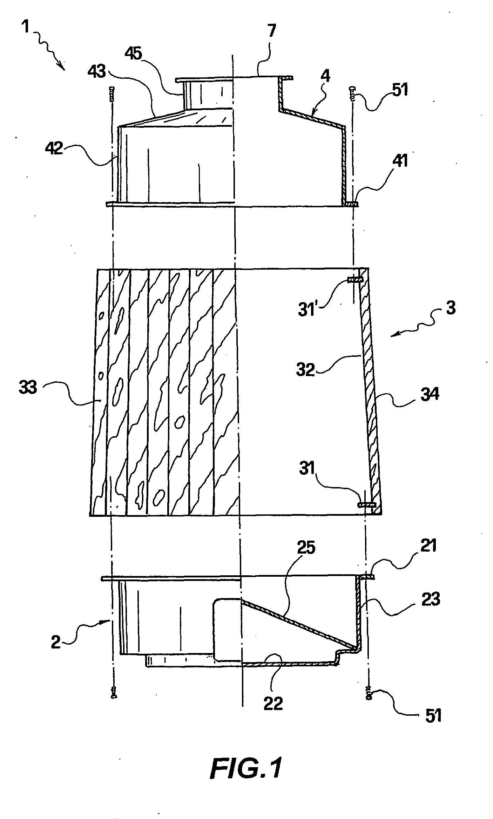

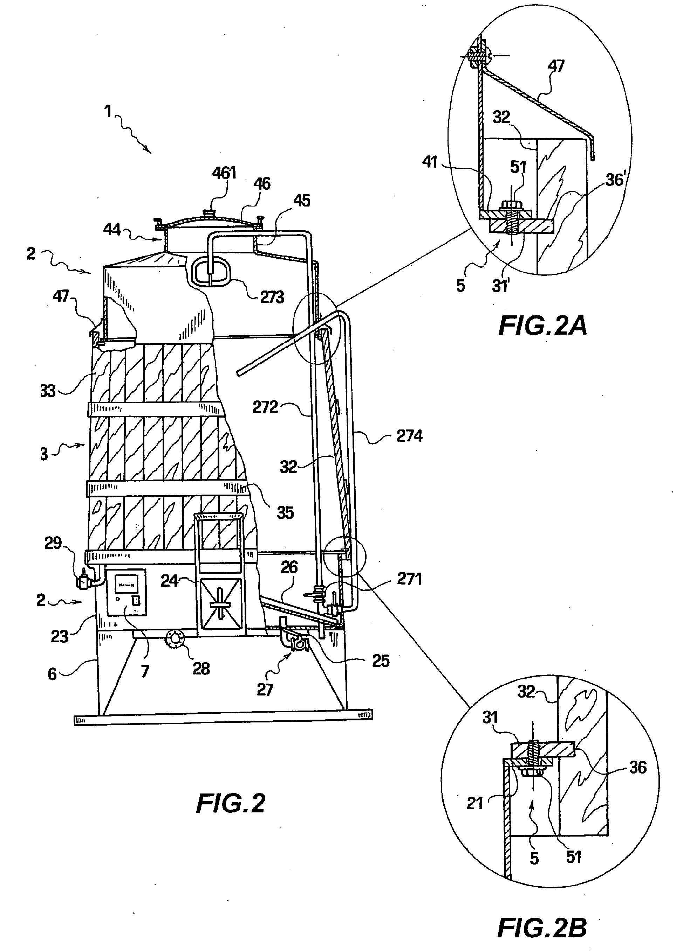

Referring initially to Figures 1 and 2, a fermenting and cellaring vat according to the present invention is generally denoted by 1.

Preferably, the vat 1 has a conical or frustoconical shape and it mainly comprises: a bottom portion 2; a side portion 3, defining a wooden wall 34 between the content of the vat and the outside; and a top portion 4.

Said bottom 2, side 3 and top 4 portions are longitudinally aligned and connectible through means for sealed coupling and uncoupling, generally denoted by 5, shown in detail in Figures 2A and 2B. Said coupling means 5 comprises a first flange 21, included in the bottom portion 2, and a second flange 41, included in the top portion 4 and that can be respectively coupled and uncoupled to a first counterflange 31 and a second counterflange 31' projecting from an internal surface 32 of said wooden side portion 3. The flange-counterflange coupling is carried out by a bolting 51.

Preferably, bottom portion 2, top portion 4 and coupling means 5 are made of a material selected from a group comprising stainless steel, titanium, other metal alloys for alimentary use and, in general, composites for alimentary use.

As it is shown in Figure 1, the bottom portion 2 has a base 22 of a preferably circular shape and a side wall 23, substantially annular and shaped so as to comprise at its top end said flange 21.

In the present embodiment, on the wall 23, near the base 22, there is a discharge hatch 24 that may, e.g., be of sash type, as shown in Figure 2, hinged, held in position by wing nuts and manually operable, with or without mechanical servomechanism or by pneumatic means. Always on the bottom portion 2 it is present heating and/or cooling means, not depicted in the Figures. In particular, the heating and/or cooling means is preferably included in said side wall 23, which provides cavity casings of roughened surface, run channel or half pipe-type with cooling/heating fluid flow internally to the same wall.

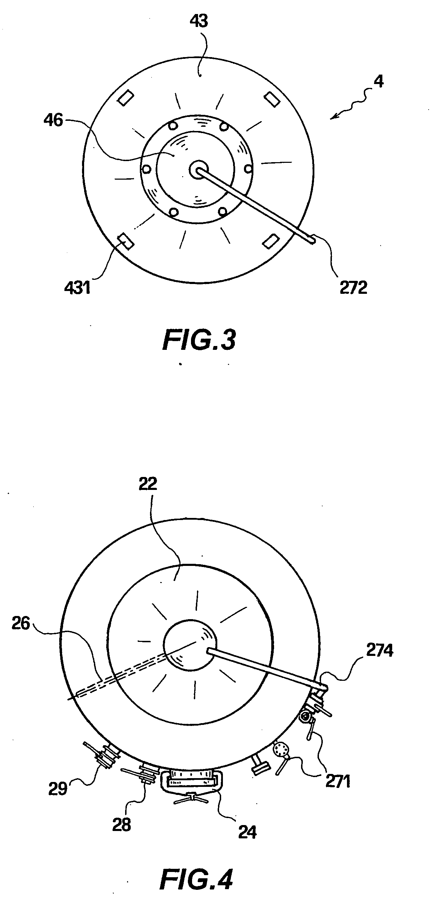

The cavity casings may be made, e.g., by hot- or cold-water piping, according to needs. They may be supplied from the outside, e.g. with network (cold) water or sanitary (hot) water, without requiring more complex cooling or heating systems. Moreover, the bottom portion 2 provides means for extracting the drained pomace. In particular, in the present embodiment said extracting means provides, at the internal surface of the base 22, a conical bottom wall 25 onto which there slides a motor-driven pomace extracting vane 26 rotating about a pin, not depicted in the Figures. Said pin is located at the center of said base 22, at the top end of said conical wall 25. As it is more evident in Figures 2 and 4, the bottom portion 2 may provide means for under-cap pumpover and spraying, generally denoted by 27, and one or more valves 28 and 29 for a total and a partial emptying (pumping down), respectively, of the vat 1. Said under-cap pumpover and spraying means 27 comprises valves 271 for adjusting the flow of fluid (must, wine) to be delivered; at least one pumpover duct 272 and related sprayer 273, preferably jet-type, of said fluid; an under-cap spraying duct 274; and a pumpover pump, not depicted.

The pumpover duct 272 and the under-cap spraying duct 274, extend from the bottom portion 2 along the side portion 3, ending respectively near the top and the bottom internal end of the top portion 4. The duct 274, at its top portion ending into the top portion 4, has an elbow defining a downward tilt; preferably, said tilt with respect to the longitudinal axis of the vat is of about 45°.

Referring to Figure 2, the bottom portion 2 comprises a plurality of adjustable supports 6 constrained to said base 22.

Lastly, according to a preferred embodiment the bottom portion 2 provides a control panel and/or console 7 apt to control, in case even through specific sensors, the fermentation parameters of the must contained in the vat: temperature, developed alcohol, etc., and setting steps such as pumpovers, punching-downs, etc., varying their frequency and duration on the basis of the same fermentation pattern.

Of course, variant embodiments of the bottom portion 2 could provide pomace extracting means of auger or gravity chute type, or with any means known to a person skilled in the art. It is likewise evident that any automation means used and present in modern fermenting vats is to be understood as encompassed in other embodiments referable to the same inventive kernel.

Referring to Figures 2, 2A and 2B, the side portion 3 comprises a plurality of staves 33 defining the wooden wall 34 having said internal surface 32 into contact with the content of the vat; metal hoops 35 apt to exert on said staves 33 a pressure toward the inside of the vat; and said first 31 and second 31' counterflange of said coupling and uncoupling means 5 apt to oppose said pressure exerted by said metal hoops 35.

Near the bottom and top ends of said internal surface 32, said wooden wall 34 has a first 36 and a second 36' slot, defining along the entire circumference a track for said first 31 and second 31' counterflange, respectively. Said counterflanges 31 and 31' are substantially hermetically coupled to said slots 36 and 36' and project from said internal surface 32.

Preferably, the wooden wall 34 is of oak and has a cylindrical shape, curved with a central belly (typical of casks) or a frustoconical shape, with the bottom end of a diameter substantially greater than the top one.

As it is shown in Figure 1, the top portion 4 has a substantially annular side wall 42 shaped so as to provide at its bottom end said flange 41 and at its top end a preferably conical closing element 43, centrally comprising an expansion vessel 44. As it is shown in Figures 1 and 2, the expansion vessel 44 is comprised of a neck 45 defining an opening 7 and a cover 46 comprising a blow-off valve 461. Onto the closing element 43 there are provided a plurality of hoist eyebolts 431 (Figure 3) whereas along the annular wall 42, at the side portion 3, there is a removable dripper 47 allowing to keep clean the zone in which the coupling between top portion 4 and side portion 3 takes place.

Lastly, as with the bottom portion 2 also the top portion 4 may provide heating and/or cooling means, preferably of cavity casing type, not depicted in the Figures.

Of course, variant embodiments of the top portion 4 could provide means for spraying, punching-down and/or air-assisted punching-down, and/or submerged cap grids, and/or rotating reels and/or any automation means known to a person skilled in the art.

Of course, bottom portion 2 and top portion 4 may be insulated, whereas the wooden side portion is naturally insulated and therefore, among other things, it tends to slow down end-fermentation heat loss, thereby improving extraction and colour stability of tannins.

By now it will be evident that the vat subject-matter of the present invention, comprising a bottom portion 2, a wooden side portion 3 and a top portion 4 that can be coupled and uncoupled, allows to be easily hauled uncoupled and then directly assembled in a cellar. In general, vats, though having a relatively low weight, for their haulage require use of motor vehicles, trailers or semitrailers for special transport, as is usually the case with large-size artefacts. In the case of the vat subject-matter of the present invention, the haulage may occur with conventional motor vehicles even in the case of haulage of plural vats, as the different portions of the vats themselves can be stacked, thereby reducing overall dimensions. Moreover, it will be appreciated that the presence of a top portion, preferably of metal, comprising a side wall 42, allows also during the fermentation stage to have the entire internal wooden surface 32 into contact with the must. The absence of zones of internal wooden surface 32 into contact with air during fermentation prevents the proliferation of harmful substances in said zones and the contextual use of all of the wooden surface useful for must micro-oxygenation. These features, combined to the heating and/or cooling means present in the top 4 and in the bottom 2 portions make the vat 1 particularly suitable not only for fermenting, but also for temperature-controlled cellaring of wines. In fact, the presence of metal walls, preferably of stainless steel, provided with external cooling and/or heating cavity casings, besides preventing any contamination of the must or wine by the cooling or heating fluid, allows heat-conditioning just of the in-steel cellaring, whereas the presence of wooden walls provides beneficial effects related to the release of wood tannins in the presence of transpiration. Moreover, it will be appreciated that the vat subject-matter of the present invention has the side portion 3 devoid of any means or device, so as to carry out the sole wood-must/wine exchange function and allow easy cleaning and maintenance of the side portion 3 itself. Lastly, it is evident that the bottom portion, the top portion and the coupling and uncoupling means, e.g. of stainless steel, exhibit a use life extremely longer than the use life of the wooden wall of said side portion 3. The option of coupling and uncoupling the various portions of the vat, subject-matter of the present invention, allows to easily replace the sole degraded wooden wall 34 or part thereof.

The present invention has hereto been described with reference to preferred embodiments thereof. It is understood that other embodiments referable to the same inventive kernel might exist, all falling within the protective scope of the claims hereinafter.

## Claims

1. A fermenting and/or cellaring vat (1), comprising:
- a bottom portion (2);
- a side portion (3) defining a wooden wall (34) between the content of the vat and the outside; and
- a top portion (4);
**characterized in that** it comprises, at said bottom (2) and/or top (4) portion, means (5) for the sealed coupling and uncoupling between said side portion (3) and said bottom portion (2) and/or between said side portion (3) and said top portion (4), so allowing the assembling/disassembling of the vat.

2. The vat (1) according to the preceding claim, wherein said bottom portion (2) and top portion (4) are substantially made of metal material, preferably of stainless steel.

3. The vat (1) according to claim 1 or 2, wherein said coupling and uncoupling means (5) comprises at least one flange (21, 41) and one counterflange (31, 31').

4. The vat (1) according to the preceding claim, wherein said bottom portion (2) and said top portion (4) have a first flange (21) and a second flange (41) that can be respectively coupled and uncoupled to a first counterflange (31) and a second counterflange (31') projecting from an internal surface (32) of the wooden wall (34) of the side portion (3).

5. The vat (1) according to claim 3 or 4, wherein said counterflanges (31) and (31') projecting from the internal wooden surface (32) are respectively arranged near a bottom end and a top end of the side portion (3) and inserted in a respective slot (36) and (36') apt to ensure a hermetic counterflange-wood coupling.

6. The vat (1) according to any one of the claims 3 to 5, wherein said flange-counterflange coupling is carried out through a bolting (51).

7. The vat (1) according to any one of the preceding claims, wherein said bottom portion (2) comprises means for heating and/or cooling.

8. The vat (1) according to the preceding claim, wherein said heating and/or cooling means comprises cavity casings preferably of roughened surface and/or run channel and/or half pipe-type in said bottom portion (2).

9. The vat (1) according to any one of the preceding claims, wherein said bottom portion (2) comprises a preferably circular base (22) and a substantially annular side wall (23).

10. The vat (1) according to the preceding claim, wherein said side wall (23) comprises at its top end said flange (21).

11. The vat (1) according to any one of the preceding claims, wherein said bottom portion (2) has at least one discharge hatch (24) preferably of sash type with a pneumatic opening.

12. The vat (1) according to any one of the preceding claims, wherein said bottom portion (2) has means for extracting the drained pomace.

13. The vat (1) according to the preceding claim, wherein said means for extracting the drained pomace is selected from a group comprising auger, rotating vane or vanes, gravity chute discharging means.

14. The vat (2) according to any one of the preceding claims, wherein said bottom portion has means (27) for under-cap pumpover and/or spraying of the must/wine.

15. The vat (1) according to any one of the preceding claims, wherein said bottom portion (2) comprises a control panel and/or console (7) of the type apt to control, in cooperation or not in cooperation with sensors, the fermentation parameters of the must contained in the vat (1), and setting steps such as pumpovers, punching-downs, etc., varying their duration on the basis of the same fermentation pattern.

16. The vat (1) according to any one of the preceding claims, wherein said wooden side portion (3) is of oak.

17. The vat (1) according to any one of the preceding claims, wherein said side portion has the internal surface (32) entirely into contact with the must during the fermentation stage.

18. The vat (1) according to any one of the preceding claims, having cooling and/or heating means at said top portion (4).

19. The vat (1) according to any one of the preceding claims, wherein said top portion (4) has means for spraying, punching-down and/or air-assisted punching-down, and/or submerged cap grids, and/or rotating reels.

20. The vat (1) according to any one of the preceding claims, wherein said top portion (4) comprises a substantially annular side wall (42) comprising at its bottom end said flange (41) and at its top end a closing element (43).

21. The vat (1) according to any one of the preceding claims, wherein said closing element (43) has an expansion vessel (44) with a cover (46) preferably comprising a blow-off valve (461).

22. The vat (1) according to any one of the preceding claims, wherein said top portion (4) has hoist eyebolts (431) apt to be engaged during the coupling and uncoupling steps.

23. The vat (1) according to any one of the preceding claims, wherein said top portion has a removable dripper (47) applied on said annular wall (42) at the wooden side portion 3 so as to allow to keep clean the zone of coupling between the top portion (4) and the side portion (3).

24. The vat (1) according to any one of the preceding claims, wherein said means for cooling and/or heating said bottom portion (2) and/or said top portion (4) is such as to allow the keeping of a constant temperature or internal temperature gradient, regardless of the place in which said vat is located.

## Patentansprüche

1. Gärungs- und/oder Einkellerungsfass (1), enthaltend:
- einen Bodenabschnitt (2);
- einen Seitenabschnitt (3), der eine Holzwand (34) zwischen dem Inhalt des Fasses und dem Außenraum definiert; und
- einen oberen Abschnitt (4);
**dadurch gekennzeichnet, dass** es am Bodenabschnitt (2) und/oder oberen Abschnitt (4) Einrichtungen (5) zum abdichtenden Verbinden und Trennen des Seitenabschnittes (3) und des Bodenabschnittes (2) und/oder des Seitenabschnittes (3) und des oberen Abschnittes (4) enthält, so dass ein Zusammensetzen/Zerlegen des Fasses möglich ist.

2. Fass (1) gemäß dem vorhergehenden Anspruch, bei dem der Bodenabschnitt (2) und der obere Abschnitt (4) im wesentlichen aus einem Metallmaterial, vorzugsweise aus rostfreiem Stahl bestehen.

3. Fass (1) nach Anspruch 1 oder 2, bei dem die Verbindungs- und Trenneinrichtung (5) wenigstens einen Flansch (21, 41) und einen Gegenflansch (31, 31') enthält.

4. Fass (1) gemäß dem vorhergehenden Anspruch, bei dem der Bodenabschnitt (2) und der obere Abschnitt (4) einen ersten Flansch (21) und einen zweiten Flansch (41) haben, die jeweils mit einem ersten Gegenflansch (31) und einem zweiten Gegenflansch (31'), die von einer Innenfläche (32) der inneren Holzwand (34) des Seitenabschnittes (3) hervorstehen, verbunden und von diesen getrennt werden können.

5. Fass (1) nach Anspruch 3 oder 4, bei dem die Gegenflansche (31) und (31'), die von der inneren Holzwand (32) hervorstehen, jeweils in der Nähe eines Bodenendes und eines oberen Endes des Seitenabschnittes (3) angeordnet sind und in einen jeweiligen Schlitz (36) und (36') eingefügt sind, um eine hermetische Gegenflansch-Holz-Verbindung sicherzustellen.

6. Fass (1) nach einem der Ansprüche 3 bis 5, bei dem die Flansch-Gegenflanschverbindung durch eine Verschraubung (51) ausgeführt ist.

7. Fass (1) nach einem der vorhergehenden Ansprüche, bei dem der Bodenabschnitt (2) eine Einrichtung zum Heizen und/oder Kühlen enthält.

8. Fass (1) nach einem der vorhergehenden Ansprüche, bei dem die Heiz- und/oder Kühleinrichtung Hohlraumgehäuse vorzugsweise vom Typ einer rauen Oberfläche und/oder einer Laufrinne und/oder eines Halbrohres enthält.

9. Fass (1) nach einem der vorhergehenden Ansprüche, bei dem der Bodenabschnitt (2) ein vorzugsweise kreisförmiges Basiselement (22) und eine im wesentlichen ringförmige Seitenwand (23) enthält.

10. Fass (1) nach einem der vorhergehenden Ansprüche, bei dem die Seitenwand (23) an ihrem oberen Ende den Flansch (21) enthält.

11. Fass (1) nach einem der vorhergehenden Ansprüche, bei dem der Bodenabschnitt (2) eine Ausgabeluke (24) vorzugsweise vom Typ eines Fensterflügels mit einer pneumatischen Öffnungseinrichtung enthält.

12. Fass (1) nach einem der vorhergehenden Ansprüche, bei dem der Bodenabschnitt (2) eine Einrichtung zum Extrahieren entwässerten Tresters hat.

13. Fass (1) nach einem der vorhergehenden Ansprüche, bei dem die Einrichtung zum Extrahieren von entwässertem Trester aus der Gruppe gewählt ist, die besteht aus Förderschnecken, Drehflügel- oder Rutschen-Ausgabeeinrichtungen.

14. Fass (2) nach einem der vorhergehenden Ansprüche, bei dem der Bodenabschnitt eine Einrichtung (27) für das Unterdeckel-Umwälzen und/oder -Sprühen des Mostes/Weins hat.

15. Fass (1) nach einem der vorhergehenden Ansprüche, bei dem der Bodenabschnitt (2) ein Steuerfeld und/oder eine Konsole (7) eines Typs enthält, der dazu eingerichtet ist, im Zusammenwirken mit Sensoren oder nicht im Zusammenwirken mit Sensoren die Fermentierungsparameter des Mostes, der im Fass (1) enthalten ist, und Einstellschritte, wie etwa die Umwälzungen, Niederdrückvorgänge und dergleichen zu steuern, die ihre Dauer auf der Basis dieses Fermentierungsmusters ändern.

16. Fass (1) nach einem der vorhergehenden Ansprüche, bei dem der Holzseitenabschnitt (3) aus Eiche besteht.

17. Fass (1) nach einem der vorhergehenden Ansprüche, bei dem beim Seitenabschnitt die Innenoberfläche (32) während der Fermentierung vollständig in Kontakt mit dem Most steht.

18. Fass (1) nach einem der vorhergehenden Ansprüche, bei dem sich die Kühl- und/oder Heizeinrichtung im oberen Abschnitt (4) befindet.

19. Fass (1) nach einem der vorhergehenden Ansprüche, bei dem der obere Abschnitt (4) eine Einrichtung zum Sprühen, Niederdrücken und/oder luftunterstützten Niederdrücken und/oder eingetauchte Deckelsiebe und/oder Drehtrommeln hat.

20. Fass (1) nach einem der vorhergehenden Ansprüche, bei dem der obere Abschnitt (4) eine im wesentlichen ringförmige Seitenwand (42) enthält, die an ihrem unteren Ende den Flansch (42) und an ihrem oberen Ende ein Verschlusselement (43) enthält.

21. Fass (1) nach einem der vorhergehenden Ansprüche, bei dem das Verschlusselement (43) ein Ausdehnungsgefäß (44) mit einer Abdeckung (46) hat, die vorzugsweise ein Überdruckventil (461) enthält.

22. Fass (1) nach einem der vorhergehenden Ansprüche, bei dem der obere Abschnitt (4) Hebe-Ösenschrauben (431) hat, die dazu eingerichtet sind, während der Verbindungs- und Trennschritte in Eingriff gebracht zu werden.

23. Fass (1) nach einem der vorhergehenden Ansprüche, bei dem der obere Abschnitt eine abnehmbare Abtropfeinrichtung (47) hat, die an der ringförmigen Wand (42) am Holzseitenabschnitt 3 derart angebracht ist, dass sie den Verbindungsbereich zwischen dem oberen Abschnitt (4) und dem Seitenabschnitt (3) sauberhalten kann.

24. Fass (1) nach einem der vorhergehenden Ansprüche, bei dem die Einrichtung zum Kühlen und/oder Heizen des Bodenabschnittes (2) und/oder des oberen Abschnittes (4) derart beschaffen ist, dass sie das Beibehalten einer konstanten Temperatur oder eines inneren Temperaturgradienten unabhängig von dem Ort gestattet, an dem sich das Fass befindet.

## Revendications

1. Cuve de fermentation et/ou de cave (1) comprenant :
- une partie inférieure (2) ;
- une partie latérale (3) définissant une paroi en bois (34) entre le contenu de la cuve et l'extérieur ; et
- une partie supérieure (4) ;
**caractérisée en ce qu'**elle comprend, au niveau de ladite partie inférieure (2) et/ou supérieure (4), un moyen (5) permettant le couplage hermétique et le découplage entre ladite partie latérale (3) et ladite partie inférieure (2) et/ou entre ladite partie latérale (3) et ladite partie supérieure (4), permettant ainsi le montage/démontage de la cuve.

2. Cuve (1) selon la revendication 1, dans laquelle ladite partie inférieure (2) et ladite partie supérieure (4) sont substantiellement faites d'un matériau métallique, de préférence de l'acier inoxydable.

3. Cuve (1) selon la revendication 1 ou 2, dans laquelle ledit moyen de couplage et découplage (5) comprend au moins une bride (21, 41) et une contre-bride (31, 31').

4. Cuve (1) selon la revendication précédente, dans laquelle ladite partie inférieure (2) et ladite partie supérieure (4) ont une première bride (21) et une deuxième bride (41) qui peuvent être couplées et découplées respectivement à une première contre-bride (31) et une deuxième contre-bride (31') faisant saillie depuis une surface intérieure (32) de la paroi en bois (34) de la partie latérale (3).

5. Cuve (1) selon la revendication 3 ou 4, dans laquelle lesdites contre-brides (31) et (31') faisant saillie depuis la surface intérieure en bois (32) sont respectivement placées près d'une extrémité inférieure et d'une extrémité supérieure de la partie latérale (3) et insérées dans une fente respective (36) et (36') apte à assurer un couplage contre-bride/bois hermétique.

6. Cuve (1) selon l'une quelconque des revendications 3 à 5, dans laquelle ledit couplage bride/contre-bride est effectué au moyen d'un assemblage par boulons (51).

7. Cuve (1) selon l'une quelconque des revendications précédentes, dans laquelle ladite partie inférieure (2) comprend un moyen pour chauffer et/ou refroidir.

8. Cuve (1) selon la revendication précédente, dans laquelle ledit moyen de chauffage et/ou de refroidissement comprend des boîtiers creux, de préférence du type à surface rugueuse et/ou à canal de circulation et/ou en demi tube dans ladite partie inférieure (2).

9. Cuve (1) selon l'une quelconque des revendications précédentes, dans laquelle ladite partie inférieure (2) comprend une base de préférence circulaire (22) et une paroi latérale substantiellement annulaire (23).

10. Cuve (1) selon la revendication précédente, dans laquelle ladite paroi latérale (23) comprend à son extrémité supérieure ladite bride (21).

11. Cuve (1) selon l'une quelconque des revendications précédentes, dans laquelle ladite partie inférieure (2) comporte au moins une vanne d'évacuation (24), de préférence du type à châssis avec ouverture pneumatique.

12. Cuve (1) selon l'une quelconque des revendications précédentes, dans laquelle ladite partie inférieure (2) comporte un moyen pour extraire le marc récupéré.

13. Cuve (1) selon la revendication précédente, dans laquelle ledit moyen pour extraire le marc récupéré est choisi dans un ensemble comprenant une vis, une ou des vanne(s) rotative(s) et un moyen d'évacuation de type goulotte à gravité.

14. Cuve (2) selon l'une quelconque des revendications précédentes, dans laquelle ladite partie inférieure comporte un moyen (27) permettant le transvasement couvert et/ou la pulvérisation du moût/vin.

15. Cuve (1) selon l'une quelconque des revendications précédentes, dans laquelle ladite partie inférieure (2) comprend un panneau de commande et/ou console (7) du type apte à commander, en coopération ou non avec des capteurs, les paramètres de fermentation du moût contenu dans la cuve (1), et réglant des étapes comme des transvasements, des perforations, etc. en faisant varier leur durée en se basant sur le même schéma de fermentation.

16. Cuve (1) selon l'une quelconque des revendications précédentes, dans laquelle ladite partie latérale en bois (3) est en chêne.

17. Cuve (1) selon l'une quelconque des revendications précédentes, dans laquelle la surface intérieure (32) de la partie latérale est entièrement en contact avec le moût pendant l'étape de fermentation.

18. Cuve (1) selon l'une quelconque des revendications précédentes, comportant un moyen de refroidissement et/ou de chauffage au niveau de ladite partie supérieure (4).

19. Cuve (1) selon l'une quelconque des revendications précédentes, dans laquelle ladite partie supérieure (4) comporte un moyen pour la pulvérisation, le percement et/ou le percement assisté par air, et/ou des grilles de chapeau immergé et/ou des tambours rotatifs.

20. Cuve (1) selon l'une quelconque des revendications précédentes, dans laquelle ladite partie supérieure (4) comprend une paroi latérale substantiellement annulaire (42) comprenant dans son extrémité inférieure ladite bride (41) et dans son extrémité supérieure un élément de fermeture (43).

21. Cuve (1) selon l'une quelconque des revendications précédentes, dans laquelle ledit élément de fermeture (43) comporte un vase d'expansion (44) muni d'un couvercle (46) comprenant de préférence une soupape d'échappement (461).

22. Cuve (1) selon l'une quelconque des revendications précédentes, dans laquelle la partie supérieure (4) comporte des boulons à oeil de levage (431) aptes à être saisis pendant les étapes de couplage et de découplage.

23. Cuve (1) selon l'une quelconque des revendications précédentes, dans laquelle ladite partie supérieure comporte un goutteur amovible (47) appliqué sur ladite paroi annulaire (42) au niveau de la partie latérale en bois (3) pour permettre à la zone de couplage entre la partie supérieure (4) et la partie latérale (3) de rester propre.

24. Cuve (1) selon l'une quelconque des revendications précédentes, dans laquelle ledit moyen pour refroidir et/ou chauffer ladite partie inférieure (2) et/ou ladite partie supérieure (4) est apte à maintenir une température constante ou un gradient de température interne, quel que soit l'endroit dans lequel est placée ladite cuve.
